# EUROPÄISCHE PATENTSCHRIFT

(11) **EP 1 923 211 B1**
(45) Veröffentlichungstag und Bekanntmachung des Hinweises auf die Patenterteilung: **29.09.2010**
(21) Anmeldenummer: 07033539.3
(22) Anmeldetag: 31.10.2007
(51) Int. Cl.: B32B 27/04, B32B 29/04, D21H 27/28

(54) **BESCHICHTUNGSMATERIALIEN SOWIE VERFAHREN ZUM HERSTELLEN SOLCHER BESCHICHTUNGSMATERIALIEN**
COATING MATERIALS AND METHOD FOR MANUFACTURING SUCH COATING MATERIALS
MATÉRIAUX DE REVÊTEMENT AINSI QUE PROCÉDÉ DE FABRICATION DE TELS MATÉRIAUX DE REVÊTEMENT

(30) Priorität: 20.11.2006 DE 102006054890
(43) Veröffentlichungstag der Anmeldung: 21.05.2008
(73) Patentinhaber: SÜDDEKOR GmbH, 89150 Laichingen (DE)
(72) Erfinder: Haller, Heinz, Dr., 73207 Plochingen (DE)
(74) Vertreter: Wagner, Kilian

(56) Entgegenhaltungen:
- EP-A- 1 634 995
- WO-A-00/44576
- WO-A-00/44984
- DE-A1-102004 034 790
- DE-C1- 19 508 797
- DE-U1-202006 007 317

## Beschreibung

Die vorliegende Erfindung betrifft zwei Verfahren zum Herstellen blatt- oder bahnförmiger dekorativer Beschichtungsmaterialien, insbesondere Beschichtungsfolien, derartige dekorative Beschichtungsmaterialien sowie eine Verwendung der Beschichtungsmaterialien.

Aus dem Stand der Technik sind dekorative Beschichtungsfolien, etwa in der Form von sog. Finish-Folien, allgemein bekannt; sie werden beispielsweise zum Herstellen von Möbeln oder zur Herstellung von Laminatfußböden verwendet.

Aus der PCT/EP 2004/008035 ist eine dekorative Beschichtungsfolie sowie ein Verfahren zu deren Herstellung bekannt, wobei sich die bekannte Beschichtungsfolie insbesondere für den Einsatz auf stark beanspruchten Flächen wie etwa im Küchen- oder industriellen Produktionsbereich eignet, da sie eine hohe Abriebfestigkeit aufweist. Die hohe Abriebfestigkeit der bekannten Beschichtungsfolie wird dadurch realisiert, dass eine auf eine Trägerschicht aufgebrachte, Füllstoff enthaltende Basisschicht mit einem strahlenhärtenden Harz gemeinsam mit einer auf diese im getrockneten Zustand aufgebrachte Deckschicht ohne abrassive Füllstoffe durch Bestrahlen mit UV- und/oder Elektronenstrahlen vernetzt wird. Durch die sich sowohl durch die Deckschicht als auch durch die Basisschicht erstreckende Strahlenvernetzung wird eine gute Haftung der beiden oberen Schichten der Beschichtungsfolie untereinander erreicht. Die bekannte Beschichtungsfolie und deren Herstellungsverfahren hat sich bewährt. Bei der bekannten Beschichtungsfolie ist von Nachteil, dass sich die vorimprägnierte TrägerSchicht, d.h. das bereits bei der Papierherstellung mit Harzpartikeln versehene Papier, schlecht und aufwendig bedrucken lässt (verlaufendes Druckbild). Die vorimprägnierte Trägerschicht lässt sich schlechter bedrucken, als ein saugfähiges Dekorpapier. Die Dekordrucker wählen bevorzugt säugfähige Dekorpapiere, sodass aus diesem Grund eine Vielzahl hochwertiger Drucke auf diesen Papier zur Verfügung steht.

Aus der EP 0 991 816 B1 und der DE 197 34 941 A1 ist ein Verfahren zur Herstellung einer Werkstoffbahn bekannt, bei der ein fertiges Rohpapier mit strahlenhärtendem Harz getränkt und danach thermisch getrocknet wird. Die nicht vernetzte, thermisch getrocknete Trägerschicht wird sodann bedruckt und mit einer ESH-Lackschicht versehen, woraufhin dann die Werkstoffbahn durch Bestrahlen vernetzt wird. Nachteilig bei der bekannten Werkstoffbahn ist, dass die Haftung zwischen der Werkstoffbahn und einem Holzträgersubstrat (z.B. HDF-Platte) nicht optimal ist. Ferner scheint die Haftung zwischen der getrockneten Trägerschicht und der der ESH-Lackschicht unter Berücksichtigung der Härte und der Kratzfestigkeit des Gesamtsystems verbesserungsbedürftig.

Die DE 10 2004 034 790 A1 zeigt eine dekorative Beschichtungsfolie, bei der eine Basisschicht auf eine trockene, vorimprägnierte Trägerschicht aufgebracht wird. Die Haftung zwischen der Trägerschicht und der Basisschicht ist verbesserungsbedürftig.

Die WO 97/33929 beschreibt ein Verfahren zum Herstellen eines Beschichtungsmaterials, bei dem eine Trägerschicht getrocknet und die getrocknete Trägerschicht mit einer Schicht beschichtet wird, die keinen abrassiven Füllstoff beinhaltet. Die auf die Trägerschicht aufgebrachte Schicht umfasst Aminoplast bzw. Phenoplast und hydroxylgruppenhaltiges Polyacrylat bzw. Polyester, wobei sich diese Komponenten innerhalb der auf die Trägerschicht aufgebrachte Schicht vermischen. Auch bei dem beschriebenen Beschichtungsmaterial ist die Haftung zwischen der Trägerschicht und der darauf aufgebrachten Schicht verbesserungsbedürftig.

Die DE 20 2006 007 317 U1 beschreibt eine dekorative Bodenbelags-Beschichtungsfolie, bei der auf einer Trägerschicht aus Papier und/oder Kunststoff eine Basisschicht aufgebracht ist. Auch hier ist die Haftung zwischen der Trägerschicht und der Basisschicht verbesserungsbedürftig.

Die WO 00/44984 A, die EP-A- 1 634 995, die DE 195 087 97 C1 sowie die WO 00/44 576 A beschreiben Halbzeuge, bei denen als Bindemittel ausschließlich Kondensationsharze eingesetzt werden. Die Halbzeuge erlangen ihre optimierten Eigenschaften erst durch Beaufschlagung mit hohem Druck und hoher Temperatur.

Der Erfindung liegt daher die Aufgabe zugrunde, Beschichtungsmaterialien, insbesondere Beschichtungsfolien, mit mindestens zwei Schichten vorzuschlagen, wobei einerseits eine hohe Abriebfestigkeit der fertigen Beschichtungsmaterialien gewährleistet ist und andererseits sichergestellt ist, dass die Haftung zwischen sämtlichen benachbarten Schichten, insbesondere zwischen der Trägerschicht und der die Füllstoffe (z.B. Korund) aufweisenden Basisschicht optimal ist. Ferner soll sich das dekorative Beschichtungsmaterial für das flächige Kaschieren und für Ummantelungsaufgaben eignen und in planarer Form vorliegen bzw. nach Beendigung des Herstellungsprozesses sich nicht in unerwünschter Weise einrollen (schüsseln). Weiterhin soll sich das Beschichtungsmaterial auch in kleinen Mengen wirtschaftlich herstellen lassen. Ferner besteht die Aufgabe im Bereitstellen von Verfahren zum Herstellen derartiger Beschichtungsmaterialien.

Diese Aufgabe wird mit einem Beschichtungsmaterial mit den Merkmalen der unabhängigen Ansprüche 15 und 18 mittels der Verfahren mit den Merkmalen der unabhängigen Verfahrensansprüche 1 und 11 sowie durch die Verwendung der Beschichtungsmaterialien nach Patentanspruch 21 gelöst. Vorteilhafte Weiterbildungen der Erfindung sind in den Unteransprüchen beschrieben.

Der Erfindung liegt der Gedanke zugrunde, die mindestens ein strahlenhärtendes Harz und mindestens einen abrassiven Füllstoff, wie beispielsweise anorganische Füllstoffe wie Korund und/oder Glasmehl und/oder Quarzmehl und/oder organische Füllstoffe wie Polyethylenpulver, Polypropylenpulver und/oder Polytetraflourethylenpulver aufweisende Basisschicht in einem flüssigen oder pastösen Aggregatzustand auf die in einem vorhergehenden Verfahrensschritt mit einem Tränkharz getränkte Trägerschicht, insbesondere Trägerbahn aufzubringen. Um eine optimale Haftung der Basisschicht auf der Trägerschicht bei dem fertigen Beschichtungsmaterial zu realisieren, ist es wesentlich, dass die Trägerschicht aus Papier und/oder Kunststofffasern zum Zeitpunkt des Aufbringens der Basisschicht zumindest noch feucht ist. Dies bedeutet, dass die mit Tränkharz durchtränkte Trägerschicht noch nass ist, oder zumindest eine ausreichend hohe Restfeuchte aufweist, so dass sich ein Übergangsbereich zwischen Trägerschicht und Basisschicht ausbilden kann, welcher sowohl Tränkharz als auch strahlenhärtendes Harz der Basisschicht aufweist. Hierdurch wird erreicht, dass nach der Beschichtung der Trägerschicht und der Basisschicht strahlenhärtende Präpolymere des strahlenhärtenden Harzes in den Bereich der Trägerschicht hineinragen und dass hierdurch bei einem späteren Bestrahlungsschritt eine optimale Schichtenbindung zwischen Trägerschicht und Basisschicht verwirklicht wird. Im Rahmen der vorliegenden Erfindung soll "strahlenhärtendes Harz" ein solches Harz verstanden werden, welches mit Hilfe von Elektronenstrahlen vernetzt und härtbar ist - ESH - oder durch Bestrahlung mit UV-Licht, wobei hier gegebenenfalls Photoinitiatoren zuzugeben sind. Vorzugsweise werden als strahlenhärtende Harze wässrige acrylatische, Dispersionen, die physikalisch trocknen und erst bei Bestrahlung mit Elektronen- oder UV-Strahlen vernetzen, eingesetzt. Ferner können als' strahlenhärtende Harze wässrige acrylatische Dispersionen eingesetzt werden, die nicht pyhsikalisch trocknen und erst bei Bestrahlung mit Elektronenstrahlen und/oder UV-Strahlen vernetzen. Der Anteil an Füllstoff an der Basisschicht beträgt bevorzugt je nach Anwendung zwischen 10 und 50 Gew.-%.

Nach dem Aufbringen der Basisschicht auf die Trägerschicht wird die Basisschicht, insbesondere unter Zufuhr von Wärme getrocknet. Bei diesem Schritt wird bevorzugt auch die zumindest noch feuchte Trägerschicht mitgetrocknet. Hierdurch wird eine definierte Basisschichtoberfläche geschaffen, auf die dann mindestens eine weitere Schicht, insbesondere eine dünne Deckschicht aufgebracht werden kann. Gegebenenfalls kann mindestens eine, später noch zu erläuternde, Zwischenschicht zwischen Deckschicht und Basisschicht vorgesehen werden. Der Anspruchswortlaut ist also so zu verstehen, dass die Deckschicht oberhalb, d.h. entweder unmittelbar auf der Basisschicht oder unmittelbar auf einer Zwischenschicht anzuordnen ist. Die Deckschicht enthält, wie die Basisschicht, zumindest ein strahlenhärtendes Harz (z.B. wässrige Dispersion eines Urethanacrylasts), wobei sich die Harze in der Deckschicht und der Basisschicht unterscheiden können. Zum Zeitpunkt des Aufbringens der Deckschicht ist die Basisschicht zwar physikalisch trocken; jedoch zumindest nicht vollständig vernetzt. Bevorzugt ist die Basisschicht zu diesem Zeitpunkt noch unvernetzt. Wesentlich ist, dass noch unvernetzte Präpolymere in der getrockneten Basisschicht vorhanden sind, so dass die Deckschicht und die Basisschicht nach dem Aufbringen der Deckschicht gemeinsam durch Bestrahlen mit UV- und/oder Elektronenstrahlen (fertig) vernetzt werden können. Durch die gemeinsame Vernetzung der Basisschicht und der Deckschicht wird eine optimale Haftung zwischen diesen Schichten realisiert, was sich auch vorteilhaft auf die Abriebfestigkeit des mit dem beschriebenen Verfahren hergestellten Beschichtungsmaterials auswirkt.

Ein weiterer wesentlicher Vorteil der Erfindung besteht darin, dass auch bereits kleine Mengen an Beschichtungsmaterial wirtschaftlich hergestellt werden können, da das erfindungsgemäße Verfahren kein vorimprägniertes Papier benötigt. Für die Trägerschicht kann herkömmliches, nicht vorimprägniertes, saugfähiges, insbesondere pigmenthaltiges Dekorpapier verwendet werden. Die Imprägnierung bzw. Tränkung ist Teil des vorgeschlagenen Verfahrens, wobei die Tränkung vorzugsweise unmittelbar vor dem Aufbringen der Basisschicht erfolgt. Durch die Tränkung mit Tränkharz wird die Spaltfestigkeit und die Kratzfestigkeit des Papiers und damit der gesamten Trägerschicht verbessert. Ein wesentlicher Vorteil der Erfindung besteht darin, dass in einer großen Vielfalt, auch in kleinen Mengen kostengünstig, beziehbares bedrucktes Dekorpapier (ohne Harzanteil) als Basis für die Trägerschicht verwendet werden kann, wodurch auch kleine Mengen an Beschichtungsmaterial - und nahezu beliebigem Dekor, wirtschaftlich herstellbar sind.

Durch die beschriebenen Maßnahmen wird erreicht, dass die so erzeugte Beschichtungsfolie überraschend starke Abriebfestigkeit zeigt; unter Verwendung der nach EN 13329 geregelten Kriterien zur Messung der Abriebfestigkeit werden Werte deutlich oberhalb 2000 Umdrehungen erreicht, so dass auf die beschriebene Weise Beschichtungen der Abriebklasse AC3 hergestellt werden können.

In Weiterbildung der Erfindung ist mit Vorteil vorgesehen, dass auch das Tränkharz mindestens ein strahlenhärtendes Harz enthält. Bei einer derartigen, vorteilhaften Ausführungsform kann die Trägerschicht gemeinsam mit der Basisschicht und der Deckschicht, welche, wie zuvor erläutert, jeweils ebenfalls mindestens ein strahlenhärtendes Harz aufweisen, vernetzt werden, wodurch die Haftung der Schichten aneinander verbessert wird. Insbesondere können, je nach Harzwahl, die strahlenhärtenden Harze der jeweils benachbarten untereinander vernetzen, was die Schichtenbindung zusätzlich verbessert. Die Menge des Tränkharzes in der Trägerschicht wird bevorzugt so gewählt, dass das Gewichtsverhältnis zwischen Tränkharz (trocken) zu Substrat (Papier und/oder Kunststoff) 1:2 bis 1:4 beträgt. Das Verhältnis wird bevorzugt in Abhängigkeit des absoluten Gewichtes des Substrates gewählt.

Zusätzlich oder alternativ zu dem strahlenhärtenden Harz kann das Tränkharz mindestens ein thermisch härtendes Harz enthalten, so dass die Trägerschicht bei dem Trocknungsvorgang der Basisschicht teilweise aushärtet. Werden thermische Harze und strahlenhärtende Harze kombiniert, so bleibt die Trägerschicht mit Vorteil trotzdem während des Trocknungsvorganges teilweise nicht vernetzt (strahlenhärtende Harze), so dass eine gemeinsame Vernetzung mit den anderen Schichten durch UV- und/oder Elektronenstrahlbestrahlung möglich ist. Als thermisch härtende Harze können beispielsweise wässrige Dispersionen aus Butylacrylat und/oder Styrol eingesetzt werden. Durch das Vorsehen thermisch härtender Harze in der Trägerschicht wird die Verbindbarkeit mit einem Holzsubstrat, insbesondere einer HDF-Platte, wesentlich verbessert.

Weiterhin können als thermisch härtende Harze wässrige Kondensationsharze, wie beispielsweise Melamin, Formaldehyd-Harze oder Harnstoff-Formaldehyd-Harze eingesetzt werden.

Um ein definierteres Aufbringen der Basisschicht auf die Trägerschicht zu realisieren, kann es von Vorteil sein, wenn die Trägerschicht zum Zeitpunkt des Aufbringens der Basisschicht nicht mehr vollkommen nass, sondern angetrocknet ist. Zur Beschleunigung kann hierzu Wärme zugeführt werden. Es hat sich als vorteilhaft herausgestellt, wenn die Trägerschicht zum Zeitpunkt des Aufbringens der Basisschicht mindestens noch eine Restfeuchte von 10 % bezogen auf das Gewicht der Trägerschicht (Papier und/oder Kunststoff + Tränkharz) aufweist. Durch das Antrocknen der Trägerschicht kann ein undefiniertes "Aufschwimmen" der Basisschicht auf der Trägerschicht verhindert werden.

Unter anderem aus Kostengründen kann es von Vorteil sein, wenn die Basisschicht zusätzlich zu dem mindestens einen strahlenhärtenden Harz mindestens ein thermisch härtendes Harz umfasst. Bevorzugt weist die Deckschicht keine thermisch härtenden, sondern ausschließlich mindestens ein strahlenhärtendes Harz auf, um eine erhöhte Kratzfestigkeit realisieren zu können.

Für bestimmte Anwendungsfälle ist es denkbar, die Basisschicht vor dem Aufbringen der Deckschicht durch Bestrahlung teilzuvernetzen. Hierbei muss jedoch darauf geachtet werden (durch Steuerung der Bestrahlungsdauer und/oder Intensität), dass nicht das gesamte strahlenhärtende Harz der Basisschicht vernetzt wird, um ein abschließendes gemeinsames Vernetzen des strahlenhärtendes Harzes der Deckschicht und der Basisschicht realisieren zu können. Für den Fall, dass die Trägerschicht, was bevorzugt ist, auch mindestens ein strahlenhärtendes Harz enthält, wird dieses bei dem fakultativen Zwischenbestrahlen ebenfalls teilvernetzt.

Wie eingangs erwähnt, muss die obere Deckschicht nicht unmittelbar auf die Basisschicht aufgebracht werden, sondern es kann zunächst mindestens eine Zwischenschicht unmittelbar auf die getrocknete Basisschicht aufgebracht werden, auf die dann unmittelbar die Deckschicht aufgebracht wird. Auch ist das Vorsehen mehrerer Zwischenschichten denkbar. Bevorzugt enthält die Zwischenschicht zumindest ein strahlenhärtendes Harz, so dass die Zwischenschicht gemeinsam mit den anderen Schichten bei der Endbestrahlung vernetzt werden kann, um die Schichtenhaftung zu optimieren.

Auch hierbei ist es denkbar, dass die Basisschicht vor dem Aufbringen der Zwischenschicht durch eine Zwischenbestrahlung teil-, jedoch nicht vollständig, vernetzt wird.

Von entscheidendem Vorteil ist es, wenn die Deckschicht und/oder die Zwischenschicht Funktionszusätze, insbesondere elektrisch dissipative Partikel und/oder antibakteriell wirkende Partikel und/oder schalldämmende Partikel umfasst, wobei die antibakteriell wirkenden Partikel auch in die Deckschicht eingebracht werden können. Zur ergänzenden Offenbarung wird auf die DE 20 2006 007 317 verwiesen, welche im Hinblick auf die Ausbildung einer Funktionsschicht bzw. die Ausbildung von Funktionszusätzen in die vorliegende Offenbarung einbezogen gelten soll.

Mit Vorteil ist vorgesehen, dass die Basisschicht in einer Schichtdicke zwischen 10 und 100 Mikrometern aufgetragen wird und/oder in einer solchen Schichtstärke aufgetragen wird, dass die Basisschicht im getrockneten Zustand eine Dicke zwischen 10 und 70 Mikrometern aufweist, und/oder die Deckschicht in einer Schichtstärke zwischen 10 und 30 Mikrometern aufgebracht wird.

Weiter von Vorteil ist es, wenn die Zwischenschicht in einer Schichtstärke zwischen 10 und 30 Mikrometern aufgebracht wird.

Bevorzugt ist das strahlenhärtende Harz der Basisschicht ein wässriges Gemisch aus großmolekularen und kleinmolekularen Präpolymeren, wobei bevorzugt die Partikelgröße der abrassiven Füllstoffe an die Schichtstärke der Basisschicht angepasst ist.

Mit Vorteil ist vorgesehen, dass das strahlenhärtende Harz (Imprägnierharz) der Trägerschicht ein wässriges Gemisch aus mindestens einem Kondensationsharz sowie großmolekluaren und kleinmolekularen vernetzenden Präpolymeren ist.

In Weiterbildung der Erfindung ist vorgesehen, dass das strahlenhärtende Harz der Zwischenschicht ein wässriges Gemisch aus großmolekularen und kleinmolekularen Präpolymeren umfasst. Es ist zweckmäßig, als Deckschicht mindestens ein lösungsmittelfreies und/oder wasserfreies Harz oder mindestens ein Harz mit einer strahlenhärtenden, wässrigen Dispersion einzusetzen, die einen Wassergehalt von vorzugsweise maximal 70 % aufweist.

Von besonderem Vorteil ist es, die Deckschicht vor dem Vernetzen zu strukturieren und weiter bevorzugt die Strukturierung der Deckschicht bildlich synchron mit einem vor dem Beschichten auf der Trägerschicht aufgedruckten Muster erfolgt. Gerade dann, wenn die unterliegende Trägerschicht eine Bedruckung oder dgl. Bemusterung aufweist, bietet es sich an, zur Erzeugung von Holzfaser- oder Maserungseffekten eine dieser (Holz-) Bedruckung korrespondierende Strukturierung der Deckschicht vorzunehmen, indem die Strukturierungswerkzeuge entsprechend dem unterliegenden Muster ausgerichtet werden. Bei einer von abrassiven Füllmittel freien Deckschicht lässt sich eine derartige Strukturierung verschleißarm und einfach vor dem UV- und/oder Elektronenstrahl vernetzen, erreichen.

Vorzugsweise ist die Trägerschicht eine getränkte Bahn, wobei bevorzugt Papier, Holzfurnier und/oder Faserstoffbahn mit Tränkharz getränkt wird.

Es hat sich als vorteilhaft erwiesen, dass die Basisschicht vor dem Aufbringen der Deckschicht derart getrocknet wird, dass die Restfeuchte unter 3 %, vorzugsweise unter 2 % beträgt, wodurch sich die Basisschicht gut handeln lässt und insbesondere nicht an Walzen anklebt. Vorzugsweise wird solange getrocknet, bis auch die Trägerschicht die gesamten Restfeuchtewerte aufweist.

Bevorzugt wird auf die der Basisschicht entgegengesetzte Seite der Trägerschicht, insbesondere nach der Endvernetzung, ein thermisch reaktiver Kleber aufgebracht, wobei der Kleber ein Auftragsgewicht im Bereich zwischen 3 und 30 g/m², bevorzugt, 3 bis 20 g/m², weiter bevorzugt 3 bis 10 g/m², aufweist, und/oder der Kleber eine Reaktionstemperatur <160°C, bevorzugt <100° C, aufweist.

In Weiterbildung der Erfindung ist vorgesehen, dass der Kleber so ausgewählt und eingerichtet ist, dass der Schritt des gemeinsamen Vernetzens der Deckschicht und der Basisschicht keine Aktivierung des Klebers bewirkt.

Gemäß einer besonders bevorzugten Weiterbildung der Erfindung ist vorgesehen, dass die Schritte des Beschichtens der Trägerschicht, des Trocknens der Basisschicht, insbesondere zusammen mit der Trägerschicht, gegebenenfalls des Aufbringens der Zwischenschicht und des Aufbringens der Deckschicht und der gemeinsamen Vernetzung von zumindest der Basisschicht und der Deckschicht, vorzugsweise auch gemeinsam mit der Trägerschicht, in einem durchgehenden, kontinuierlichen Verfahrensablauf (inline) erfolgt.

Gemäß einer vorteilhaften Ausgestaltung der Erfindung ist vorgesehen, dass das dekorative, abriebfeste Beschichtungsmaterial auf einen Träger aus Papier, Kunststoff, Holz oder Holzwerkstoff mittels einer statischen Presse oder mittels einer kontinuierlich arbeitenden Presse, insbesondere einer Rollenheißkaschieranlage oder Doppelbandpresse mit einem Druck im Bereich zwischen 1 und 80 bar sowie einer Temperatur im Bereich zwischen 100°C und 180°C aufgepresst wird.

Ferner betrifft die Erfindung ein weiteres Verfahren, das nicht sämtliche Schritte des vorbeschriebenen Verfahrens umfasst. Sämtliche zuvor offenbarten Verfahrensschritte, die sich bei dem im folgenden beschriebenen weiteren Verfahren anwenden lassen, sollen als im Zusammen mit diesem weiteren Verfahren offenbart gelten. Das weitere erfindungsgemäße Verfahren endet mit dem Trocknen der Basisschicht, gegebenenfalls zusammen mit der Trägerschicht bzw. einem darauffolgenden fakultativ Aufwickel- bzw. Aufrollschritt. Auf das Aufbringen der obersten Deckschicht wird bewusst verzichtet. Wesentlich ist auch bei dem weiteren Verfahren, dass eine flüssige oder pastöse Basisschicht, enthaltend mindestens ein strahlenhärtendes Harz und mindestens einen Füllstoff auf die mit einem Tränkharz getränkte Trägerschicht aus Papier und/oder Kunststofffasern aufgetragen wird, wobei zum Zeitpunkt des Auftragens der Basisschicht die getränkte Trägerschicht nass oder zumindest noch feucht ist, um eine optimale Verbindung zwischen Basisschicht und Trägerschicht zu realisieren. Die Füllstoffe in der Basisschicht sorgen dabei für eine hohe Abriebfestigkeit. Nach dem Aufbringen der Basisschicht, welche fakultativ zusätzlich zu dem strahlenhärtenden Harz auch zumindest ein thermisch härtendes Harz enthalten kann, wird die Basisschicht, gegebenenfalls zusammen mit der Trägerschicht getrocknet. Bei Bedarf kann das strahlenhärtende Harz der Basisschicht durch einen Bestrahlungsvorgang teilvernetzt, jedoch keinesfalls vollständig vernetzt werden. Bevorzugt enthält die Trägerschicht ebenfalls mindestens ein strahlenhärtendes Harz.

Mit dem weiteren Verfahren lässt sich insbesondere ein Beschichtungsmaterial herstellen, welches, zumindest nicht durch Strahlen, nicht vollständig vernetzt ist und sich daher für die Weiterverarbeitung eignet. Die vollständige Vernetzung kann durch ESH oder UV zu einem wesentlich späteren Zeitpunkt, insbesondere nach Aufbringen einer ein strahlenhärtendes Harz enthaltenden Deckschicht, erfolgen.

Von besonderem Vorteil ist es, wenn sämtliche Verfahrensschritte des weiteren Verfahrens kontinuierlich, d.h. inline, erfolgen.

Bevorzugt wird die Basisschicht, nachdem sie auf die zumindest noch feuchte Trägerschicht aufgebracht wurde, bis auf eine Restfeuchte von unter 3 %, vorzugsweise von unter 2 % getrocknet. Bevorzugt wird der Trocknungsvorgang solange fortgeführt, bis auch die Trägerschicht diese Restfeuchtewerte erreicht.

Von besonderem Vorteil ist es, das Beschichtungsmaterial bestehend aus Trägerschicht und Basisschicht nach dem Trocknen der Basisschicht aufzurollen, wodurch es zwischengelagert und gegebenenfalls an einem anderen Ort und/oder zu einer anderen Zeit weiterverarbeitet werden kann.

Die Erfindung umfasst auch ein, vorzugsweise mit dem zuerst beschriebenen Herstellungsverfahren hergestelltes blatt- oder bahnförmiges dekoratives Beschichtungsmaterial, insbesondere Beschichtungsfolie. Das erfindungsgemäße Beschichtungsmaterial zeichnet sich zum einen durch eine gute Haftung sämtlicher Schichten untereinander sowie durch eine hohe Abriebfestigkeit aus. Das Beschichtungsmaterial umfasst eine getränkte (im fertigen Produkt trockene) Trägerschicht aus Papier und/oder Kunststofffasern sowie eine hierauf aufgebrachte Basisschicht und eine oberhalb der Basisschicht, also unmittelbar auf dieser oder auf einer Zwischenschicht aufgebrachte Deckschicht, wobei zumindest sowohl die Basisschicht, als auch die Deckschicht jeweils ein strahlengehärtetes Harz aufweisen. In der Basisschicht ist mindestens ein Füllstoff zur Erhöhung der Abriebfestigkeit vorgesehen. Bevorzugt umfasst die Deckschicht keinen Füllstoff. Das erfindungsgemäße Beschichtungsmaterial zeichnet sich durch einen Übergangsbereich zwischen Trägerschicht und Basisschicht aus, der sich durch das Aufbringen der Basisschicht auf die zumindest noch feuchte Trägerschicht ausbildet. Dieser Übergangs- bzw. Mischbereich enthält sowohl Tränkharzbestandteile der Trägerschicht als auch vernetzbare Bestandteile des strahlenhärtenden Harzes der Basisschicht, wodurch eine besonders gute Verbindung zwischen Trägerschicht und Basisschicht gewährleistet ist.

Sämtliche im Zusammenhang mit den erfindungsgemäßen Verfahren offenbarten Verfahrensmerkmale sollen auch als vorrichtungsgemäße Merkmale der erfindungsgemäßen Beschichtungsmaterialien offenbart gelten.

Bevorzugt enthält das Tränkharz zumindest ein strahlenhärtendes Harz, so dass der Übergangsbereich sowohl strahlenhärtendes Harz der Trägerschicht als auch strahlenhärtendes Harz der Basisschicht umfasst, wobei die Harze der benachbarten Schichten bevorzugt miteinander vernetzt sind.

Es hat sich als vorteilhaft erwiesen, wenn der Übergangsbereich eine Mindestdicke von 5 bis 10 Mikrometern aufweist.

Das erfindungsgemäße Verfahrensprodukt bzw. das erfindungsgemäße dekorative Beschichtungsmaterial eignet sich insbesondere für stark beanspruchte Beschichtungsflächen, etwa Fußbodenplatten oder Fußbodenpaneele. Zusätzlich sind bevorzugte Anwendungsgebiete im Rahmen der vorliegenden Erfindung der industrielle Produktionsbereich bzw. Küchenoberflächen. Das erfindungsgemäße Beschichtungsmaterial weist vorzugsweise eine Abriebfestigkeit gemessen nach EN 13329 (Methode S42) von mehr als 900 Umdrehungen, insbesondere von mehr als 1500 Umdrehungen, bevorzugt von mehr als 2000 Umdrehungen, weiter bevorzugt von mehr als 2500 Umdrehungen, auf.

Weiter bevorzugt weisen die Basisschichten und die Deckschichten im ausgehärteten und/oder vernetzten Zustand eine gemeinsame Dicke von weniger als 40 - 80 Mikrometern auf und sind transparent.

Weiter mit Vorteil ist vorgesehen, dass die durch die Basisschicht sowie die Deckschicht sichtbare Trägerschicht eine Bemusterung aufweist.

Von zusätzlichem Vorteil ist es, dass die Deckschicht eine Strukturierung aufweist, wobei die Strukturierung bildlich mit einer auf der Trägerschicht vorgesehenen Bemusterung oder Bedruckung synchronisiert ist.

Ein weiterer Vorteil ist es, dass zwischen Basisschicht und Deckschicht mindestens eine Zwischenschicht, insbesondere mit Funktionszusätzen, vorgesehen ist.

Weiterhin umfasst die Erfindung ein weiteres dekoratives Beschichtungsmaterial, welches vorzugsweise mit dem zuvor beschriebenen weiteren Verfahren hergestellt ist.

Das weitere blatt- oder bahnförmige dekorative Beschichtungsmaterial weist lediglich die Trägerschicht und die darauf aufgebrachte Basisschicht auf, wobei die zwischen Trägerschicht und Basisschicht einen im Zusammenhang mit dem zuvor beschriebenen Beschichtungsmaterial erläuterten Übergangsbereich aufweisen. Bevorzugt weisen die erfindungsgemäßen Beschichtungsmaterialien außer der Trägerschicht und der Basisschicht keine weiteren Schichten auf.

Zur verbesserten Steuerung der Vernetzung zumindest der Basisschicht der Beschichtungsmaterialien, ist in Ausgestaltung der Erfindung vorgesehen, dass zumindest der Basisschicht Photoinitiatoren zugesetzt sind, so dass insbesondere eine Vernetzung durch UV-Bestrahlung in Folge in Frage kommt.

In Ausgestaltung der Erfindung ist mit Vorteil vorgesehen, dass der abrassive, vorzugsweise anorganische Füllstoff in der Basisschicht Korund und/oder Quarzmehl umfasst, insbesondere in einer Körnung im Bereich zwischen 5 Mikrometern und 70 Mikrometern mittlerer Korngröße.

Um das weitere Beschichtungsmaterial problemlos zu lagern und zu transportieren zu können, ist mit Vorteil vorgesehen, dass die Trocknung der Basisschicht gegebenenfalls auf der Trägerschicht bis auf eine Restfeuchte von unter 3 %, vorzugsweise unter 2 % erfolgt und/oder dass die mit der Basisschicht beschichtete Trägerschicht klebfrei und wickelfähig vorliegt.

Bevorzugt sind die Beschichtungsmaterialien, insbesondere Beschichtungsfolien derart ausgelegt, dass sie sich zum Aufkaschieren auf plattenförmige Holz- und/oder Kunststoffwerkstoffe, gekrümmte Profilleisten und profilierte Pannele eignen.

Im Rahmen der Erfindung wird eine Verwendung des Beschichtungsmaterials, insbesondere Beschichtungsfolie zum Herstellen von Fußböden, insbesondere flexiblen Fußbodenelementen, Arbeitsplatten, Türen, Fensterbänken, Möbeln, Oberflächen von Küchen oder von industriellen oder Labor-Umgebungen beansprucht.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: einen schematischen Schichtaufbau einer dekorativen Beschichtungsfolie gemäß einer ersten, bevorzugten Ausführungsform,
- Fig. 2:: einen schematischen Schichtaufbau einer dekorativen Beschichtungsfolie gemäß einer zweiten, bevorzugten Ausführungsform,
- Fig. 3:: einen schematischen Schichtaufbau einer dekorativen Beschichtungsfolie gemäß einer dritten, bevorzugten Ausführungsform und
- Fig. 4a und Fig. 4b:: eine schematische Darstellung einer möglichen Imprägnier- und Beschichtungsanlage zur Herstellung der Beschichtungsfolien gemäß den Fig. 1 bis 3.

In den Figuren sind gleichen Gegenstände und Gegenstände mit der gleichen Funktion und mit den gleichen Bezugszeichen gekennzeichnet.

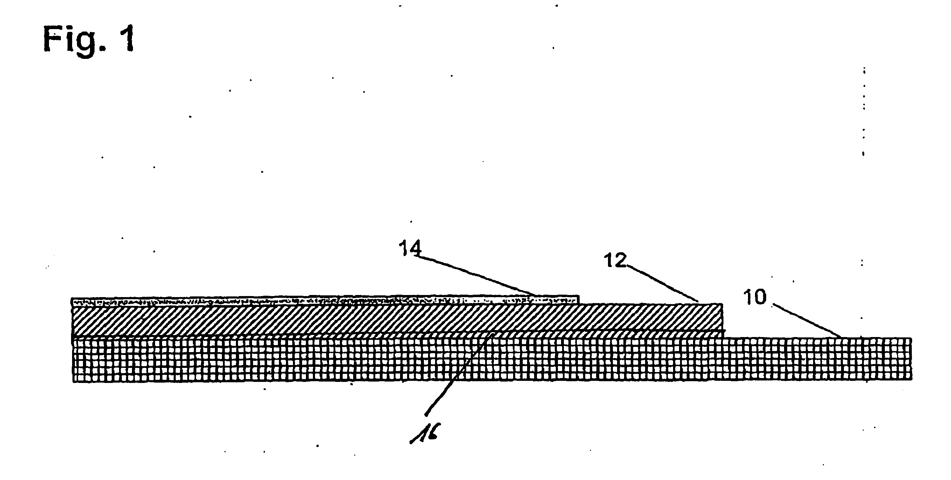

Der in der Fig. 1 gezeigte bahnförmige Träger weist eine typischerweise 70 bis 120 Mikrometer dicke Lage aus mit einem Tränkharz getränkten, bedruckten Dekorpapier als Trägerschicht 10 auf. Das zur Anwendung kommende Tränkharz enthält im gezeigten Ausführungsbeispiel eine physikalisch trocknende acrylatische Dispersion als strahlenhärtendes Harz. Unmittelbar auf der Trägerschicht 10 befindet sich eine Basisschicht zum Erreichen einer maximalen Abriebfestigkeit, in der abrassive, anorganische Füllstoffe (insbesondere Al₂O₃ sowie SiO₂) und/oder organische Füllstoffe vorgesehen sind. Eine auf der Basisschicht 12 aufgebrachte Deckschicht dient u.a. der Versiegelung der Basisschicht und bestimmt die weiteren Oberflächeneigenschaften, insbesondere den Glanzgrad und die Oberflächenstruktur. Zwischen Trägerschicht 10 und Basisschicht 12, die ebenfalls ein strahlenhärtendes Harz aufweist, ist ein Übergangsbereich 16 gebildet, in dem sowohl Bestandteile des Tränkharzes der Trägerschicht 10 sowie des strahlenhärtenden Harzes der Basisschicht 12 vorgesehen sind.

Eine typische Rezeptur zur Herstellung einer rein thermisch härtenden Trägerschicht 10 könnte wie folgt aussehen:
70 Teile Acronal 2375
30 Teile Kaurit 210
0,02 Teile Härter
0,02 Teile Benetzungsmittel

Eine typische Rezeptur zur Herstellung einer thermisch- und strahlenhärtenden Trägerschicht 10 könnte wie folgt aussehen:
50 Teile Acronal 2375
20 Teile IRR 395
30 Teile Kaurit 210
0,02 Teile Härter
0,02 Teile Benetzungsmittel

Eine typische Rezeptur zur Herstellung der Basisschicht 12 könnte wie folgt aussehen:
60 Teile IRR 395
40 Teile Korund F360

Eine typische Rezeptur zur Herstellung der Deckschicht 14 könnte wie folgt aussehen:
95 Teile Ebecryl 5129
3 Teile Mattierungsmittel
1 Teil Wachsadditiv

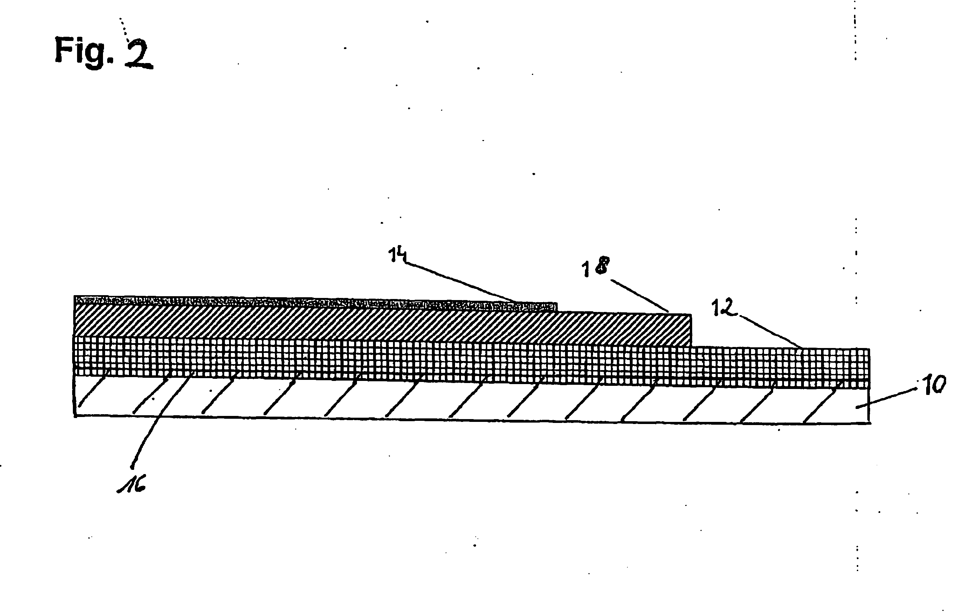

Die in Fig. 2 dargestellte Beschichtungsfolie entspricht in ihrem Aufbau im Wesentlichen der in Fig. 1 gezeigten Beschichtungsfolie mit dem einzigen Unterschied, dass die Deckschicht 14 nicht unmittelbar auf die Basisschicht 12, sondern auf eine unmittelbar auf die Basisschicht 12 aufgebrachte Zwischenschicht mit Funktionszusätzen aufgebracht ist. Auch hier ist ein Übergangsbereich 16 zwischen Trägerschicht 10 und Basisschicht 12 gebildet.

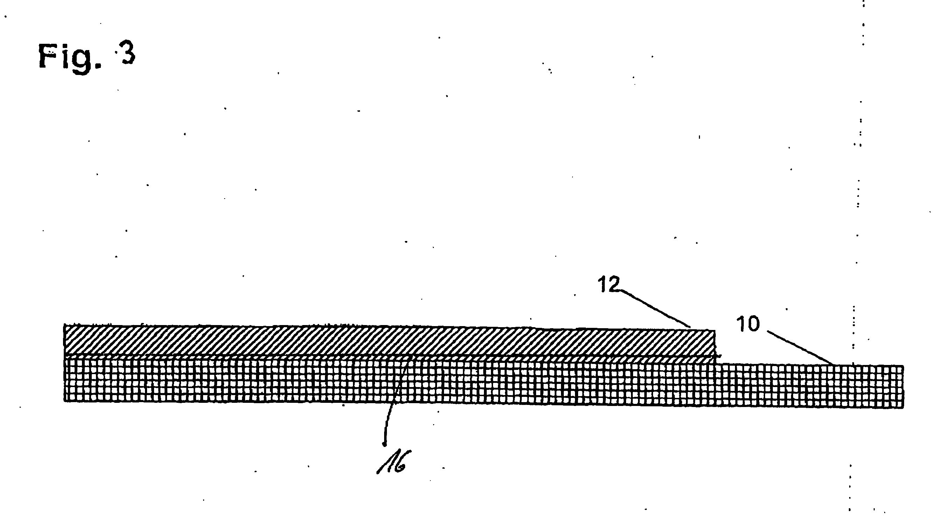

In Fig. 3 ist ein, insbesondere als Zwischenprodukt zu verwendendes Beschichtungsmaterial gezeigt, das als einzige Schichten die Trägerschicht 10 und die darauf aufgebrachte Basisschicht 12 aufweist, wobei die strahlenhärtenden Harze in der Trägerschicht 10 und der Basisschicht nicht vernetzt sind. Zwischen Basisschicht und Trägerschicht ist wieder ein Übergangsbereich 16 ausgebildet.

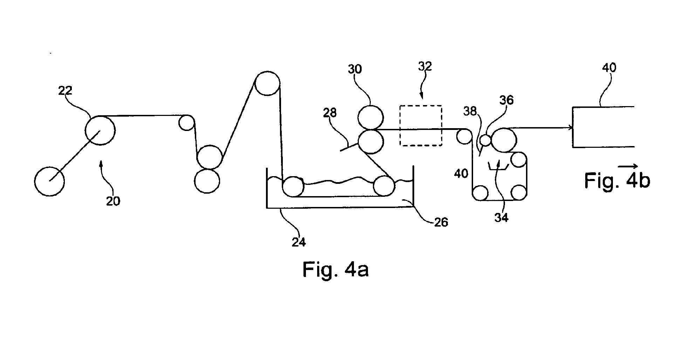

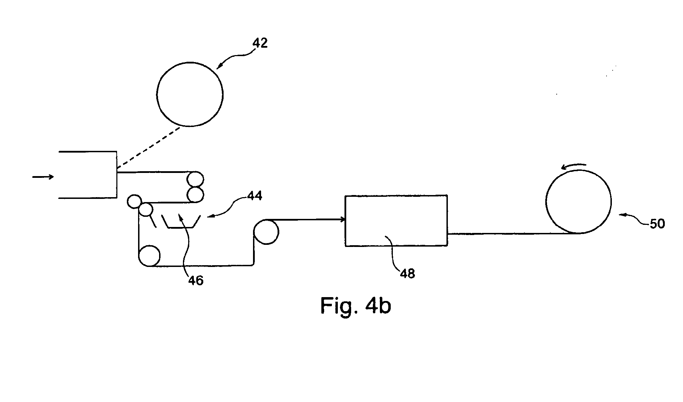

In den Fig. 4a und 4b ist eine Fertigungsstraße zur Herstellung des zuvor beschriebenen Beschichtungsmaterials schematisch dargestellt.

In einem ersten Verfahrensschritt 20 wird trockenes, saugfähiges Dekorpapier von einer Vorratsrolle 22 abgewickelt und über mehrere Walzen in eine Wanne 24 geführt, die mit Tränkharz 26 gefüllt ist. Das Tränkharz 26 enthält ein strahlenhärtendes Harz. Die vollgesaugte, nasse Dekorpapierbahn wird daraufhin an einer Walze von einem Rakel 28 abgestreift und dann von Dosierwalzen 30 definiert ausgepresst. In einem fakultativen Verfahrensschritt 32 erfolgt dann eine Zwischentrocknung, wobei die verbleibende Restfeuchte der Trägerschicht 10 % nicht unterschreiten darf. Das nach dem Schritt 32 noch feuchte und ohne den Zwischentrocknungsschritt 32 nasse Dekorpapier wird über einer Schlitzdüse 34 vorbeigeführt, mit der eine Basisschicht 12 mit strahlenhärtendem Harz aufgetragen wird, wobei daraufhin die mit der Basisschicht versehene Trägerschicht durch ein Dosierwalzenpaar läuft und definiert gepresst wird. Nach diesem Verfahrensschritt erfolgt die Trocknung in einem Inlinetrocknungsofen 40.

Je nachdem, welches Beschichtungsmaterial hergestellt wird, erfolgt entweder nach dem Trocknen in einem Verfahrensschritt 42 ein Aufwickeln der getrockneten Basis- und Trägerschicht (Beschichtungsmaterial gemäß Fig. 3) oder es wird in einem Verfahrensschritt 44 über eine Schlitzdüse 46 eine Deckschicht auf die getrocknete Basisschicht aufgebracht, die bevorzugt strahlenhärtendes Harz enthält. Zwischen darauffolgenden Dosierwalzen wird das Beschichtungsmaterial definiert ausgepresst und zu einer Bestrahlungsquelle 48 geführt, wo diese sämtliche, jeweils mindestens ein strahlenhärtendes Harz enthaltenden Schichten, in diesem Ausführungsbeispiel sämtliche Schichten, vollständig vernetzt werden. Anschließend erfolgt ein Aufwicklungsschritt 50. Gegebenenfalls wird vor dem Aufbringen der Deckschicht (14) noch eine Zwischenschicht 18 (Fig. 2) auf die Basisschicht (12) aufgebracht. Ebenso kann vor dem Aufbringen der Deck- und/oder Zwischenschicht eine Teilvernetzung durch Bestrahlung erfolgen. Wesentlich ist, dass sämtliche ein strahlenhärtendes Harz enthaltende Schichten im Endbestrahlungsschritt in der Bestrahlungsquelle 48 gemeinsam (zu Ende) vernetzt werden.

## Patentansprüche

1. Verfahren zum Herstellen eines blatt- oder bahnförmigen dekorativen, abriebfesten Beschichtungsmaterials, insbesondere Beschichtungsfolie, mit den Schritten:
- Tränken einer saugfähigen, Papier- und/oder Kunststofffasern umfassenden, Trägerschicht (10) mit einem Tränkharz,
- Aufbringen einer mindestens ein strahlenhärtendes Harz und mindestens einen abrassiven Füllstoff aufweisenden, flüssigen oder pastösen Basisschicht (12) auf die getränkte Trägerschicht, die noch nass ist oder zumindest eine ausreichend hohe Restfeuchte aufweist, so dass sich ein Übergangsbereich zwischen der Trägerschicht (10) und der Basisschicht (12) ausbilden kann, welcher sowohl Tränkharz als auch strahlenhärtendes Harz der Basisschicht (12) aufweist,
- Trocknen der Basisschicht (12), insbesondere unter Wärmezufuhr,
- Aufbringen einer mindestens ein strahlenhärtendes Harz und keine abrassiven Füllstoffe enthaltenden Deckschicht (14) auf die getrocknete Basisschicht (12),
- gemeinsames Vernetzen der strahlenhärtenden Harze in der Deckschicht (14) und der Basisschicht (12) durch Bestrahlen mit UV- und/oder Elektronenstrahlen.

2. Verfahren nach Anspruch 1,
**dadurch gekennzeichnet,**
**dass** das Tränkharz, insbesondere ausschließlich mindestens ein strahlenhärtendes Harz enthält, und dass dieses strahlenhärtende Harz gemeinsam mit dem strahlenhärtenden Harz der Basisschicht (12) und der dem strahlenhärtenden Harz der Deckschicht (14) vernetzt wird.

3. Verfahren nach einem der Ansprüche 1 oder 2,
**dadurch gekennzeichnet,**
**dass** das Tränkharz mindestens ein thermisch härtendes Harz enthält.

4. Verfahren nach einem der vorhergehenden Ansprüche,
**dadurch gekennzeichnet,**
**dass** die Trägerschicht (10) vor dem Aufbringen der Basisschicht (12), insbesondere unter Wärmezufuhr, angetrocknet wird, derart, dass mindestens eine Restfeuchte von 20 %, vorzugsweise von 25 %, bevorzugt von 30 %, besonders bevorzugt von 35 %, insbesondere bevorzugt von 40 %, verbleibt.

5. Verfahren nach einem der vorhergehenden Ansprüche,
**dadurch gekennzeichnet,**
**dass** die Basisschicht (12) und/oder die Deckschicht (14) mindestens ein thermisch härtendes Harz umfasst.

6. Verfahren nach einem der vorhergehenden Ansprüche,
**dadurch gekennzeichnet,**
**dass** die Basisschicht (12) vor dem Aufbringen der Deckschicht (14) durch Bestrahlen durch UV- und/oder Elektronenstrahlen teilvernetzt wird.

7. Verfahren nach einem der vorhergehenden Ansprüche,
**dadurch gekennzeichnet,**
**dass** vor dem Aufbringen der Deckschicht (14) eine, insbesondere mindestens ein thermisch und/oder strahlenhärtendes Harz enthaltende Zwischenschicht (18) unmittelbar auf die getrocknete Basisschicht (12) aufgebracht wird, auf die dann unmittelbar die Deckschicht (14) aufgebracht wird.

8. Verfahren nach einem der vorhergehenden Ansprüche,
**dadurch gekennzeichnet,**
**dass** die Basisschicht (12) vor dem Aufbringen der Zwischenschicht (18) durch Bestrahlen durch UV- und/oder Elektronenstrahlen teilvernetzt wird.

9. Verfahren nach Anspruch 8,
**dadurch gekennzeichnet,**
**dass** die Zwischenschicht (18) Funktionszusätze, insbesondere elektrisch dissipative Partikel und/oder antibakteriell wirkende Partikel und/oder schalldämmende Partikel, umfasst.

10. Verfahren nach einem der vorhergehenden Ansprüche,
**dadurch gekennzeichnet,**
**dass** die Schritte des Beschichtens der Trägerschicht (10), des Trocknens der beschichteten Trägerschicht (10), gegebenenfalls das Aufbringen der Zwischenschicht (18), des Aufbringens der Deckschicht (14) und des gemeinsamen Vernetzens zumindest der Basisschicht (12) und der Deckschicht (14) in einem durchgehenden, kontinuierlichen Verfahrensablauf (inline) erfolgt.

11. Verfahren zum Herstellen eines blatt- oder bahnförmigen dekorativen, abriebfesten Beschichtungsmaterials, insbesondere Beschichtungsfolie mit den Schritten:
- Tränken einer saugfähigen, Papier- und/oder Kunststofffasern umfassenden, Trägerschicht mit einem Tränkharz,
- Aufbringen einer mindestens ein strahlenhärtendes Harz und mindestens einen abrassiven Füllstoff aufweisenden flüssigen oder pastösen Basisschicht (12) auf die getränkte Trägerschicht, die noch nass ist oder zumindest eine ausreichend hohe Restfeuchte aufweist, so dass sich ein Übergangsbereich zwischen der Trägerschicht (10) und der Basisschicht (12) ausbilden kann, welcher sowohl Tränkharz als auch strahlenhärtendes Harz der Basisschicht (12) aufweist,
- Trocknen der Basisschicht, insbesondere unter Wärmezufuhr.

12. Verfahren nach Anspruch 11,
**dadurch gekennzeichnet,**
**dass** die Schritte des Beschichtens der Trägerschicht (10) und des Trocknens der Basisschicht (12) in einem durchgehenden, kontinuierlichen Verfahrensablauf (inline) erfolgt.

13. Verfahren nach einem der Ansprüche 11 oder 12,
**dadurch gekennzeichnet,**
**dass** das Trocknen der Basisschicht (12) und der Trägerschicht so lange erfolgt, bis eine Restfeuchte unter 3 %, vorzugsweise unter 2 %, erhalten wird.

14. Verfahren nach einem der Ansprüche 11 bis 13,
**dadurch gekennzeichnet,**
**dass** das Beschichtungsmaterial nach dem Trocknen der Basisschicht (12) und der Trägerschicht (10) aufgerollt wird.

15. Blatt- oder bahnförmiges, dekoratives Beschichtungsmaterial, insbesondere Beschichtungsfolie, insbesondere hergestellt mit einem Verfahren gemäß einem der Ansprüche 1 bis 10, mit
- einer mit einem Tränkharz getränkten, trockenen Trägerschicht mit Papier und/oder Kunststofffasern,
- einer auf der Trägerschicht gebildeten, ein strahlenhärtendes Harz sowie einen abrassiven Füllstoff aufweisenden, trockenen Basisschicht (12) und
- einer auf der Basisschicht (12) gebildeten Deckschicht (14), die ein strahlenhärtendes Harz aufweist,
- wobei zwischen Trägerschicht (10) und Basisschicht (12) ein Übergangsbereich (16) gebildet ist, der sowohl Tränkharz der Trägerschicht als auch vernetztes strahlenhärtendes Harz der Basisschicht (12) aufweist.

16. Beschichtungsmaterial nach Anspruch 15,
**dadurch gekennzeichnet,**
**dass** das Tränkharz strahlenhärtendes Harz umfasst, und dass der Übergangsbereich (16) sowohl strahlenhärtendes Harz der Basisschicht, also auch strahlenhärtendes Harz der Trägerschicht (10) aufweist, die insbesondere miteinander vernetzt sind.

17. Blatt- oder bahnförmiges dekoratives Beschichtungsmaterial, insbesondere Beschichtungsfolie, insbesondere hergestellt mit einem Verfahren gemäß einem der Ansprüche 11 bis 16, mit
- einer mit einem Tränkharz getränkten, trockenen Trägerschicht (10) mit Papier und/oder Kunststofffasern,
- einer auf der Trägerschicht (10) gebildeten, ein nicht oder teilweise vernetztes strahlenhärtendes Harz sowie einen abrassiven Füllstoff aufweisenden, trockenen Basisschicht,
- wobei zwischen Trägerschicht (10) und Basisschicht (12) ein Übergangsbereich (16) gebildet ist, der sowohl Tränkharz der Trägerschicht (10) als auch vernetztes strahlenhärtendes Harz der Basisschicht (12) aufweist.

18. Beschichtungsmaterial nach Anspruch 17,
**dadurch gekennzeichnet,**
**dass** die Basisschicht (12) derart getrocknet ist, dass die Basisschicht eine Restfeuchte von unter 3 %, vorzugsweise unter 2 %, aufweist und/oder die mit der Basisschicht beschichtete Trägerschicht klebfrei und wickelfähig vorliegt.

19. Beschichtungsmaterial nach einem der Ansprüche 15 bis 18,
**dadurch gekennzeichnet,**
**dass** das Beschichtungsmaterial zum Aufkaschieren auf plattenförmige, insbesondere profilierte, Holz- und/oder Kunststoffwerkstoffe ausgebildet ist.

20. Verwendung des Beschichtungsmaterials nach einem der Ansprüche 15 bis 19 zum Herstellen von Fußböden, Übergangs- und Sockelleisten, insbesondere flexiblen Fußbodenelementen, Arbeitsplatten, Türen, Fensterbänken, Möbeln, Oberflächen von Küchen oder von industriellen oder von Labor-Umgebungen.

## Claims

1. Method for the production of a decorative, wear-resistant coating material, in particular a coating film, in the form of a sheet or web, comprising the steps of:
- impregnating an absorbent support layer (10), comprising paper and/or plastics material fibres, with an impregnating resin,
- applying a liquid or paste-type base layer (12), comprising at least one radiation-curing resin and at least one abrasive filler, to the impregnated support layer, which is still wet or at least comprises sufficient residual moisture for a transition region to be able to form between the support layer (10) and the base layer (12), which region comprises both impregnating resin and radiation-curing resin from the base layer (12),
- drying the base layer (12), in particular by heating,
- applying a topcoat (14), comprising at least one radiation-curing resin and no abrasive fillers, to the dried base layer (12),
- cross-linking the radiation-curing resins in the topcoat (14) and the base layer (12) together by UV and/or electron beam irradiation.

2. Method according to claim 1, **characterised in that** the impregnating resin comprises, in particular exclusively comprises, at least one radiation-curing resin, and **in that** this radiation-curing resin is cross-linked together with the radiation-curing resin of the base layer (12) and the radiation-curing resin of the topcoat (14).

3. Method according to either claim 1 or claim 2, **characterised in that** the impregnating resin comprises at least one heat-curing resin.

4. Method according to any one of the preceding claims, **characterised in that** before the base layer (12) is applied, the support layer (10) is dried, in particular by heating, in such a way as to leave residual moisture of 20 %, preferably 25 %, preferably 30 %, more preferably 35 %, most preferably 40%.

5. Method according to any one of the preceding claims, **characterised in that** the base layer (12) and/or the topcoat (14) comprises at least one heat-curing resin.

6. Method according to any one of the preceding claims, **characterised in that** before the topcoat (14) is applied, the base layer (12) is cross-linked in part by UV and/or electron beam radiation.

7. Method according to any one of the preceding claims, **characterised in that** before the topcoat (14) is applied, an intermediate layer (18), in particular comprising at least one heat-curing and/or radiation-curing resin, is applied directly to the dried base layer (12), to which the topcoat (14) is subsequently directly applied.

8. Method according to any one of the preceding claims, **characterised in that** before the intermediate layer (18) is applied, the base layer (12) is cross-linked in part by UV and/or electron beam radiation.

9. Method according to claim 8, **characterised in that** the intermediate layer (18) comprises functional additives, in particular electrically dissipative particles and/or particles having an antibacterial effect and/or sound-insulating particles.

10. Method according to any one of the preceding claims, **characterised in that** the steps of coating the support layer (10), drying the coated support layer (10), optionally applying the intermediate layer (18), applying the topcoat (14) and cross-linking at least the base layer (12) and the topcoat (14) together are carried out in an uninterrupted, continuous process (inline).

11. Method for the production of a decorative, wear-resistant coating material, in particular a coating film, in the form of a sheet or web, comprising the steps of:
- impregnating an absorbent support layer, comprising paper and/or plastics material fibres, with an impregnating resin,
- applying a liquid or paste-type base layer (12), comprising a radiation-curing resin and at least one abrasive filler, to the impregnated support layer, which is still wet or at least comprises sufficient residual moisture for a transition region to be able to form between the support layer (10) and the base layer (12), which region comprises both impregnating resin and radiation-curing resin from the base layer (12),
- drying the base layer, in particular by heating.

12. Method according to claim 11, **characterised in that** the steps of coating the support layer (10) and drying the base layer (12) are carried out in an uninterrupted, continuous process (inline).

13. Method according to either claim 11 or claim 12, **characterised in that** the base layer (12) and the support layer are dried until residual moisture of less than 3 %, preferably less than 2 %, is obtained.

14. Method according to any one of claims 11 to 13, **characterised in that** after the base layer (12) and the support layer (10) have dried, the coating material is rolled up.

15. Decorative, coating material, in particular a coating film, in particular produced by a method according to any one of claims 1 to 10, in the form of a sheet or web, comprising:
- a dry support layer, impregnated with an impregnating resin and comprising paper and/or plastics material fibres,
- a dry base layer (12), formed on the support layer and comprising a radiation-curing resin and an abrasive filler, and
- a topcoat (14), formed on the base layer (12) and comprising a radiation-curing resin,
- wherein a transition region (16) is formed between the support layer (10) and the base layer (12) and comprises both impregnating resin from the support layer and cross-linked radiation-curing resin from the base layer (12).

16. Coating material according to claim 15, **characterised in that** the impregnating resin comprises radiation-curing resin, and **in that** the transition region (16) comprises both radiation-curing resin from the base layer and radiation-curing resin from the support layer (10), these in particular being cross-linked to one another.

17. Decorative coating material, in particular a coating film, in particular produced by a method according to any one of claims 11 to 14, in the form of a sheet or web, comprising:
- a dry support layer (10), impregnated with an impregnating resin and comprising paper and/or plastics material fibres,
- a dry base layer, formed on the support layer (10) and comprising a radiation-curing resin, which is not cross-linked or is cross-linked in part, and an abrasive filler,
- wherein a transition region (16) is formed between the support layer (10) and the base layer (12) and comprises both impregnating resin from the support layer (10) and cross-linked radiation-curing resin from the base layer (12).

18. Coating material according to claim 17, **characterised in that** the base layer (12) is dried in such a way that the base layer comprises residual moisture of less than 3 %, preferably less than 2 %, and/or the support layer coated with the base layer is in a non-adhesive form and can be wound up.

19. Coating material according to any one of claims 15 to 18, **characterised in that** the coating material is formed for lamination onto wooden or plastics materials which are in sheet form, in particular profiled.

20. Use of the coating material according to any one of claims 15 to 19 for the production of floors, transition boards and skirting boards, in particular flexible floor elements, work surfaces, doors, window sills, furniture, kitchen surfaces or industrial or working environments.

## Revendications

1. Procédé de fabrication d'un matériau de revêtement décoratif et résistant à l'abrasion en forme de lame ou de bande, en particulier d'un film de revêtement, avec les étapes suivantes :
- imprégner de résine d'imprégnation une couche de support (10) absorbante, comprenant des fibres de papier et/ou synthétiques,
- appliquer sur la couche de support imprégnée, encore mouillée ou ayant au moins une humidité résiduelle suffisante, une couche de base (12) liquide ou pâteuse comprenant au moins une résine durcissant par rayonnement et au moins une charge abrasive, de sorte qu'il se forme une zone de transition entre la couche de support (10) et la couche de base (12) qui comprend à la fois de la résine d'imprégnation et de la résine durcissant par rayonnement de la couche de base (12),
- sécher la couche de base (12), en particulier par apport de chaleur,
- appliquer sur la couche de base sèche (12) une couche de couverture (14) comprenant au moins une résine durcissant par rayonnement et pas de charge abrasive,
- réticuler conjointement les résines durcissant par rayonnement dans la couche de couverture (14) et dans la couche de base (12) sèche par irradiation avec des rayonnements UV et/ou électroniques.

2. Procédé selon la revendication 1, **caractérisé en ce que** la résine d'imprégnation comprend en particulier exclusivement au moins une résine durcissant par rayonnement, et **en ce que** ladite résine durcissant par rayonnement est réticulée conjointement avec la résine durcissant par rayonnement de la couche de base (12) et avec la résine durcissant par rayonnement de la couche de couverture (14).

3. Procédé selon l'une des revendications 1 ou 2, **caractérisé en ce que** la résine d'imprégnation comprend au moins une résine durcissant thermiquement.

4. Procédé selon l'une des revendications précédentes, **caractérisé en ce que** la couche de support (10) est séchée, en particulier par apport de chaleur, avant d'appliquer la couche de base (12), de sorte qu'il subsiste une humidité résiduelle de 20%, préférentiellement de 25%, auxquels seront préférés 30%, auxquels seront particulièrement préférés 35%, auxquels seront en particulier préférés 40%.

5. Procédé selon l'une des revendications précédentes, **caractérisé en ce que** la couche de base (12) et/ou la couche de couverture (14) comprennent une résine durcissant thermiquement.

6. Procédé selon l'une des revendications précédentes, **caractérisé en ce que** la couche de base (12) est partiellement réticulée par irradiation par des rayonnements UV et/ou électroniques avant d'appliquer la couche de couverture (14).

7. Procédé selon l'une des revendications précédentes, **caractérisé en ce qu'**avant d'appliquer la couche de couverture (14), une couche intermédiaire (18) contenant au moins une résine durcissant thermiquement et/ou par rayonnement est appliquée, sur laquelle est ensuite directement appliquée la couche de couverture (14).

8. Procédé selon l'une des revendications précédentes, **caractérisé en ce que** la couche de base (12) est réticulée partiellement par irradiation par des rayonnements UV et/ou électroniques avant d'appliquer la couche intermédiaire (18).

9. Procédé selon l'une des revendications précédentes, **caractérisé en ce que** la couche intermédiaire (18) comprend des additifs fonctionnels, en particulier des particules électriquement dissipatives et/ou des particules anti-bactériennes et/ou des particules phoniquement isolantes.

10. Procédé selon l'une des revendications précédentes, **caractérisé en ce que** les étapes de revêtement de la couche de support (10), de séchage de la couche de support (10) revêtue, le cas échéant d'application de la couche intermédiaire (18), de l'application de la couche de couverture (14) et de réticulation conjointe d'au moins la couche de base (12) et de la couche de couverture (14), ont lieu dans un processus en ligne continu (inline).

11. Procédé de fabrication d'un matériau de revêtement décoratif et résistant à l'abrasion en forme de lame ou de bande, en particulier d'un film de revêtement, avec les étapes suivantes :
- imprégner de résine d'imprégnation une couche de support (10) absorbante, comprenant des fibres de papier et/ou synthétiques,
- appliquer sur la couche de support imprégnée encore mouillée ou ayant au moins une humidité résiduelle suffisante, une couche de base (12) liquide ou pâteuse comprenant au moins une résine durcissant par rayonnement et au moins une charge abrasive, de sorte qu'il se forme une zone de transition entre la couche de support (10) et la couche de base (12) qui comporte à la fois de la résine d'imprégnation et de la résine durcissant par rayonnement de la couche de base (12),
- sécher la couche de base (12), en particulier par apport de chaleur.

12. Procédé selon la revendication 11, **caractérisé en ce que** les étapes de revêtement de la couche de support (10), et de séchage de la couche de base (12) ont lieu dans un processus en ligne continu (inline).

13. Procédé selon l'une des revendications 11 ou 12, **caractérisé en ce que** le séchage de la couche de base (11) et de la couche de support à lieu assez longtemps pour qu'une humidité résiduelle de moins de 3%, préférentiellement de moins de 2%, soit obtenue.

14. Procédé selon l'une des revendications 11 ou 12, **caractérisé en ce que** le matériau de revêtement est enroulé après le séchage de la couche de base (12) et de la couche de support (10).

15. Matériau de revêtement décoratif et résistant à l'abrasion en forme de lame ou de bande, en particulier un film de revêtement, en particulier obtenu par un procédé selon l'une des revendications 1 à 10, comprenant :
- une couche de support sèche, comprenant des fibres de papier et/ou synthétiques imprégnée d'une résine d'imprégnation,
- une couche de base sèche, comprenant au moins une résine durcissant par rayonnement et au moins une charge abrasive, formée sur la couche de support,
- une couche de couverture (14) formée sur la couche de base (12) qui comprend une résine durcissant au rayonnement,
- une zone de transition (16) étant formée entre la couche de support (10) et la couche de base (12), qui comporte à la fois de la résine d'imprégnation et de la résine durcissant par rayonnement de la couche de base (12) réticulée.

16. Matériau de revêtement selon la revendication 15, **caractérisé en ce que** la résine d'imprégnation comporte de la résine durcissant par rayonnement, et que la zone de transition comporte aussi bien de la résine durcissant par rayonnement de la couche de base que de la résine durcissant par rayonnement de la couche de support (10), qui sont en particulier réticulées entre elles.

17. Matériau de revêtement décoratif et résistant à l'abrasion en forme de lame ou de bande, en particulier de film de revêtement, en particulier obtenu par un procédé selon l'une des revendications 1 à 14, comprenant :
- une couche de support (10) sèche, comprenant des fibres de papier et/ou synthétiques imprégnée d'une résine d'imprégnation et séchée,
- une couche de base sèche, comprenant au moins une résine durcissant par rayonnement non ou partiellement réticulée et au moins une charge abrasive, formée sur la couche de support (10),
- une zone de transition (16) étant formée entre la couche de support (10) et la couche de base (12), qui comporte à la fois de la résine d'imprégnation et de la résine durcissant par rayonnement réticulée de la couche de base (12).

18. Matériau de revêtement selon la revendication 17, **caractérisé en ce que** la couche de base (12) est séchée de manière à ce que la couche de base présente une humidité résiduelle de moins de 3%, préférentiellement de moins de 2%, et/ou que la couche de support revêtue de la couche de base ne colle plus et puisse être enroulée.

19. Matériau de revêtement selon l'une des revendications 15 à 18, **caractérisé en ce que** le matériau de revêtement est formé pour être contrecollé sur des matériaux en bois ou en matière synthétiques en forme de plaques, en particulier profilés.

20. Utilisation d'un matériau de revêtement selon l'une des revendications 15 à 19 pour la fabrication de sols, de barres de seuil et de plinthes, en particulier d'éléments de sol flexibles, de plans de travail, de portes, de bancs de fenêtre, de meubles, de surfaces de cuisine ou d'environnements industriels ou de laboratoire.
